# EUROPÄISCHE PATENTSCHRIFT

(11) **EP 3 352 139 B1**
(45) Veröffentlichungstag und Bekanntmachung des Hinweises auf die Patenterteilung: **23.06.2021**
(21) Anmeldenummer: 17206461.0
(22) Anmeldetag: 11.12.2017
(51) Int. Cl.: G06T 17/05, G06K 9/00, G06T 19/20

(54) **VERFAHREN ZUR DARSTELLUNG EINER UMGEBUNG EINES FAHRZEUGES**
METHOD FOR REPRESENTING THE SURROUNDINGS OF A VEHICLE
PROCÉDÉ DE REPRÉSENTATION D'UN ENVIRONNEMENT D'UN VÉHICULE AUTOMOBILE

(30) Priorität: 20.01.2017 DE 102017200965
(43) Veröffentlichungstag der Anmeldung: 25.07.2018
(73) Patentinhaber: Robert Bosch GmbH, 70442 Stuttgart (DE)
(72) Erfinder: CANO, Raphael, 70180 Stuttgart (DE)

(56) Entgegenhaltungen:
- EP-A1- 2 709 069
- WO-A1-2016/195647
- DE-A1-102014 204 303

## Beschreibung

### Stand der Technik

Die vorliegende Erfindung betrifft ein Verfahren zur Darstellung einer Umgebung eines Fahrzeuges. Fahrassistenzsysteme sind darauf abgestellt, einen Fahrer eines Fahrzeuges während eines Bewegens des Fahrzeuges zu unterstützen. Dabei sind solche Fahrassistenzsysteme oftmals dazu ausgelegt, einen Nahbereich in der Umgebung des Fahrzeuges für den Fahrer darzustellen, um Kollisionen mit Hindernissen zu vermeiden, die für den Fahrer nicht sichtbar sind. Dazu werden in dargestellten Videobildern oftmals synthetische Elemente eingeblendet, die es dem Fahrer erlauben, eine verbleibende Distanz zwischen Objekten und dem Fahrzeug leichter einzuschätzen.

In aktuellen Kamerasystemen sind solche synthetischen Elemente oftmals quadratische, farbige Flächen, welche nicht in eine tatsächliche Umgebung des Fahrzeuges eingepasst sind. Die Europäische Patentanmeldung EP2709069A1 offenbart ein Verfahren und eine Vorrichtung für ein bildgebendes Fahrerassistenzsystem mit adaptiver Umsichtdarstellung. Mit Hilfe einer Distanzmesseinheit zwischen dem Fahrzeug und dem nächstliegenden zu erkennenden Objekt findet eine Entfernungsmessung statt und eine entsprechende Anpassung der Projektionsfläche für die virtuelle Umsichtdarstellung, die auf diese Weise verzerrungsfrei ist.

### Offenbarung der Erfindung

Das erfindungsgemäße Verfahren zur Darstellung einer Umgebung eines Fahrzeuges umfasst ein Erstellen einer dreidimensionalen Landschaft in einem virtuellen Raum, die eine Umgebung des Fahrzeuges repräsentiert, ein Erzeugen eines beweglichen virtuellen Elementes in dem virtuellen Raum, welches die Form einer Fläche aufweist und sich gemäß einem vorgegebenen Bewegungspfad durch die dreidimensionale Landschaft bewegt, wobei für jede Position entlang des vorgegebenen Bewegungspfades eine Schnittlinie des virtuellen Elements mit einer Oberfläche der dreidimensionalen Landschaft ermittelt wird und ein wiederholtes Abbilden der dreidimensionalen Landschaft aus Sicht einer virtuellen Kamera, welche in dem virtuellen Raum angeordnet ist, in einem virtuellen Kamerabild, wobei aus der Abfolge von virtuellen Kamerabildern eine Videosequenz erzeugt wird, wobei die Schnittlinie in Einzelbildern der Videosequenzen dargestellt ist, und ein Bereitstellen der Videosequenz für ein Ausgabegerät gemäß den Anspüchen.

Eine erfindungsgemäße Vorrichtung zum Bereitstellen einer Darstellung einer Umgebung eines Fahrzeuges umfasst eine Recheneinheit, welche dazu eingerichtet ist eine dreidimensionalen Landschaft, die eine Umgebung des Fahrzeuges repräsentiert, in einem virtuellen Raum zu erstellen, ein bewegliches virtuelles Elementes in dem virtuellen Raum zu erzeugen, welches die Form einer Fläche aufweist und sich gemäß einem vorgegebenen Bewegungspfad durch die dreidimensionalen Landschaft bewegt, und für jede Position entlang des vorgegebenen Bewegungspfades eine Schnittlinie des virtuellen Elementes mit einer Oberfläche der dreidimensionalen Landschaft zu ermitteln, die dreidimensionalen Landschaft aus Sicht einer virtuellen Kamera, welche in dem virtuellen Raum angeordnet ist, in einem virtuellen Kamerabild wiederholt abzubilden, und aus einer Abfolge von virtuellen Kamerabildern eine Videosequenz zu erzeugen, wobei die Schnittlinie in Einzelbildern der Videosequenz dargestellt ist, um die Videosequenz für ein Ausgabegerät gemäß den Anspüchen bereitzustellen.

Der virtuelle Raum ist ein mathematisches Konstrukt, welches mittels einer Recheneinheit erzeugt wird. Mit anderen Worten wird bei dem Erstellen der dreidimensionalen Landschaft also ein Computermodell der Umgebung des Fahrzeuges erstellt. Die dreidimensionale Landschaft setzt sich aus Objekten zusammen, welche tatsächliche Objekte in der Umgebung des Fahrzeuges repräsentieren. Es wird somit eine dreidimensionale Karte der Umgebung des Fahrzeuges erstellt. Dabei wird bevorzugt auf Sensordaten zurückgegriffen, die von Sensoren bereitgestellt werden, die an dem Fahrzeug angeordnet sind. So können eine Position und eine Form von Objekten in der Umgebung des Fahrzeuges beispielsweise mithilfe von Ultraschallsensoren, Kameras, Lidar-Systemen oder anderen abtastenden Systemen erfasst werden. Insbesondere ist auch ein Erfassen der Umgebung des Fahrzeuges mittels einer 3D-Kamera oder mittels einer 3D-Auswertung von Einzelbildern einer Kamera, die in zeitlicher Abfolge aufgenommen wurden (Structure from Motion), vorteilhaft. Die dreidimensionale Landschaft wird beispielsweise durch dreidimensionale Pixel (Voxel) in einer dreidimensionalen Matrix dargestellt (nicht Teil der beanspruchten Erfindung).

Das bewegliche virtuelle Element ist zunächst ein grafisches Hilfsmittel, welches auch transparent sein kann und nicht zwingend sichtbar ist, wenn die dreidimensionale Landschaft aus Sicht der virtuellen Kamera dargestellt wird. Die virtuelle Kamera ist keine tatsächliche Kamera, sondern ist ein Punkt in dem virtuellen Raum, der ein Blickpunkt ist, wenn eine Darstellung des virtuellen Raums und somit der dreidimensionalen Landschaft errechnet wird. Das virtuelle Element kann in seiner Form und seinen Dimensionen entweder konstant oder veränderlich sein. Das virtuelle Element weist die Form einer Fläche auf. Dies bedeutet, dass das virtuelle Element keine Tiefe aufweist. Das bedeutet jedoch nicht, dass das virtuelle Element zwingend eine Ebene ist. So kann das virtuelle Element beispielsweise eine gewölbte Fläche sein. Um gegebenenfalls eine grafische Darstellung des virtuellen Elementes und/oder der Schnittlinie zu ermöglichen, kann aus praktischen Gründen jedoch eine Flächendicke des virtuellen Elementes angenommen werden, die eine grafische Darstellung ermöglicht.

Ein Darstellen der bereitgestellten Videosequenz auf einem Ausgabegerät erfolgt insbesondere auf einem Display im Inneren des Fahrzeuges. Es wird somit für einen Fahrer des Fahrzeuges die dreidimensionale Landschaft in dem virtuellen Raum bereitgestellt.

Es wird somit mit der dargestellten Schnittlinie ein Hilfselement in der für den Fahrer bereitgestellten Ansicht eingefügt, welches diesem erlaubt, Konturen in der dargestellten Ansicht leichter zu erkennen. So ist eine Verformung der Schnittlinie ein eindeutig sichtbarer Indikator, dass ein Objekt in dem virtuellen Raum und somit auch in der tatsächlichen Umgebung des Fahrzeuges vorhanden ist.

Die Unteransprüche zeigen bevorzugte Weiterbildungen der Erfindung.

Bevorzugt umfasst das Erstellen der dreidimensionalen Landschaft in dem virtuellen Raum ein Erfassen von Kamerabildern, welche die Umgebung des Fahrzeuges abbilden, und ein Texturieren der dreidimensionalen Landschaft mittels der erfassten Kamerabilder. Es werden somit tatsächliche Bilder der Umgebung des Fahrzeuges als Texturen verwendet. Auf diese Weise kann eine besonders realistische Darstellung der Umgebung des Fahrzeuges erreicht werden.

Weiter bevorzugt ist die dreidimensionale Landschaft einer Projektionsfläche, welche entsprechend der Umgebung des Fahrzeuges geformt ist. Insbesondere ist eine Projektionsfläche ein dreidimensionales Netz in dem virtuellen Raum. Eine Projektionsfläche ist insbesondere eine Fläche, welche keine Lücken aufweist und ist ist somit eine einzelne durchgängige Fläche. Dadurch, dass die dreidimensionale Landschaft durch eine einzelne Projektionsfläche dargestellt wird, liegt lediglich eine einzelne zusammenhängende Schnittlinie des virtuellen Elementes mit der Oberfläche der dreidimensionalen Landschaft vor. Eine solche ist für einen Betrachter besonders einfach zu erkennen. Es wird somit eine Irritation des Fahrers vermieden.

Des Weiteren ist es vorteilhaft, wenn das bewegliche virtuelle Element ein expandierendes Element ist, dessen Größe mit der Bewegung entlang des vorgegebenen Bewegungspfades zunimmt. Auf diese Weise kann das virtuelle Element und somit die Länge der Schnittlinie beispielsweise an ein Sichtfeld der virtuellen Kamera angepasst werden. So kann sich das virtuelle Element beispielsweise wie eine Welle in dem virtuellen Raum ausbreiten.

Auch ist es vorteilhaft (nicht Teil der beanspruchten Erfindung), wenn sich die Bewegung des virtuellen Elements aus einer Expansion des virtuellen Elements ergibt, wobei insbesondere ein Schwerpunkt des beweglichen virtuellen Elements bei der Bewegung an einer gleichbleibenden Position bleibt. So kann sich das virtuelle Element beispielsweise um einen zentralen Punkt herum erstrecken und sich von dort aus ausbreiten. Ähnlich einer Wellenfront, die sich ergibt, wenn ein Stein in ein Gewässer fällt, breitet sich das virtuelle Element ausgehend von einem Ausgangspunkt aus in dem virtuellen Element Raum aus. Dabei ist es insbesondere vorteilhaft, wenn ein weiterer Bewegungspfad definiert ist und die Bewegungspfade jeweils eine Bewegung unterschiedlicher Abschnitte des virtuellen Elementes definieren. Insbesondere ist es dabei vorteilhaft, dass die unterschiedlichen Abschnitte des virtuellen Elementes sich in unterschiedliche Richtungen in dem virtuellen Raum bewegen. Auf diese Weise kann eine Art Welleneffekt oder Sonareffekt durch das virtuelle Element simuliert werden. Eine solche Darstellung ist besonders leicht zu interpretieren. Dabei ist es besonders vorteilhaft, wenn sich unterschiedliche Bereiche des virtuellen Elements mit identischer Geschwindigkeit von einem Ausgangspunkt entfernen.

Auch ist es vorteilhaft, wenn in zeitlicher Abfolge mehrere bewegliche virtuelle Elemente dargestellt werden, welche sich in periodischer Abfolge gemäß dem vorgegebenen Bewegungspfad durch den virtuellen Raum bewegen. Dabei können mehrere bewegliche virtuelle Elemente bzw. deren zugehörige Schnittlinien mit der Oberfläche der dreidimensionalen Landschaft gleichzeitig in der dreidimensionalen Landschaft und somit in dem virtuellen Raum dargestellt werden. Ähnlich wie bei dem zuvor genannten Beispiel eines Steines der in ein Gewässer fällt, können somit mehrere Wellenfronten, also mehrere virtuelle Elemente, den virtuellen Raum in periodischer Abfolge durchlaufen.

Dabei ist es vorteilhaft, wenn ein Zeitintervall der periodischen Abfolge verringert wird, wenn sich ein Abstand zwischen einem bestimmten Objekt in der Umgebung des Fahrzeuges verringert. So wird insbesondere mittels eines Sensors des Fahrzeugs ein Abstand zu einem bestimmten Objekt in der Umgebung des Fahrzeuges ermittelt. Abhängig von diesem Abstand wird das Zeitintervall der periodischen Abfolge verringert. Es wird somit eine Anzahl von virtuellen Elementen und somit eine Anzahl von Schnittlinien erhöht, welche in einem vorgegebenen Zeitintervall für einen bestimmten Bereich entlang des Bewegungspfades gleichzeitig sichtbar ist. Es wird somit einem Betrachter der Videosequenz schon aus dem Zeitintervall der periodischen Abfolge ersichtlich, dass eine Annäherung an ein bestimmtes Objekt folgt. Gleichzeitig wird eine Darstellung der Schnittlinie in kurzen Abfolgen erhöht, wodurch die Darstellung der Schnittlinie jederzeit sehr aktuell gehalten wird.

Ferner ist es vorteilhaft, wenn bei der Bewegung des virtuellen Elementes entlang der Schnittlinie eine Deckschicht in dem virtuellen Raum erzeugt wird. Da die Schnittlinie sich mit dem virtuellen Element durch den virtuellen Raum bewegt, ist es somit möglich, dass für den Betrachter auch Informationen für solche Bereiche bereitgestellt werden, in denen sich das virtuelle Element und somit die Schnittlinie zu einem Betrachtungszeitpunkt nicht befindet. Ferner wird mit einer solchen Deckschicht ein optisches Mittel bereitgestellt, durch welches zusätzliche Informationen optisch bereitgestellt werden können.

Die Deckschicht wird insbesondere nur in den Bereichen der Schnittlinie erzeugt, die solchen Bereichen in der Umgebung des Fahrzeuges entsprechen, in denen ein Hindernis vorhanden ist. Ein Hindernis ist insbesondere dann vorhanden, wenn sich ein Bereich der dreidimensionalen Landschaft gegenüber einem Bereich, welcher eine Fahrbahn darstellt, erhebt. Es wird somit die Deckschicht in dem virtuellen Raum nur dort generiert, wo auch ein Hindernis, beispielsweise ein Objekt in der Fahrzeugumgebung wie zum Beispiel ein anderes Fahrzeug, vorhanden ist. Die Aufmerksamkeit eines Betrachters der Videosequenz wird somit gezielt auf solche Bereiche gelenkt, die für ein Bewegen des Fahrzeuges besonders wichtig sind bzw. ein Risiko bergen.

Ferner ist es vorteilhaft, wenn Bereiche der Deckschicht nach einem vorgegebenen Zeitraum nach deren Erzeugung aus dem virtuellen Raum ausgeblendet werden. Dies kann insbesondere dadurch erfolgen, dass die Deckschicht wieder gelöscht wird oder dass diese lediglich nicht mehr dargestellt wird, beispielsweise indem diese transparent wird. Somit kann dargestellt werden, dass eine mit der Deckschicht dargestellte Information nicht mehr aktuell ist und somit verblasst. Auch wird es somit ermöglicht, dass mehrere Deckschichten dargestellt werden können, welchen unterschiedlichen, in zeitlicher Abfolge ausgesandten virtuellen Elementen zugehörig sind.

Dabei ist es vorteilhaft, wenn eine Farbe oder Textur von Punkten der Deckschicht abhängig davon gewählt wird, welchen Abstand ein jeweiliger Punkt der Deckschicht zu der virtuellen Kamera aufweist, welchen Abstand an dem jeweiligen Punkt der Deckschicht zugehöriger Punkt in der tatsächlichen Fahrzeugumgebung zu dem Fahrzeug aufweist oder wo der jeweilige Deckpunkt der Deckschicht bezüglich einer Bewegungstrajektorie des Fahrzeuges angeordnet ist. Auf diese Weise wird dem Betrachter der Videosequenz ein Indikator bereitgestellt, der es diesem ermöglicht, Abstände in dem virtuellen Raum einzuschätzen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines Ablaufdiagramms eines beispielhaften Verfahrens zur Darstellung einer Umgebung eines Fahrzeuges gemäß einer ersten Ausführungsform der Erfindung,
- Figur 2: eine beispielhafte Darstellung des virtuellen Raums gemäß der ersten Ausführungsform der Erfindung,
- Figur 3: ein erstes beispielhaftes virtuelles Kamerabild,
- Figur 4: ein zweites beispielhaftes virtuelles Kamerabild,
- Figur 5: ein drittes beispielhaftes virtuelles Kamerabild,
- Figur 6: ein viertes beispielhaftes virtuelles Kamerabild, und
- Figur 7: eine Darstellung eines Fahrzeug mit einer erfindungsgemäßen Vorrichtung zur Darstellung einer Umgebung eines Fahrzeuges.

### Ausführungsform(en) der Erfindung

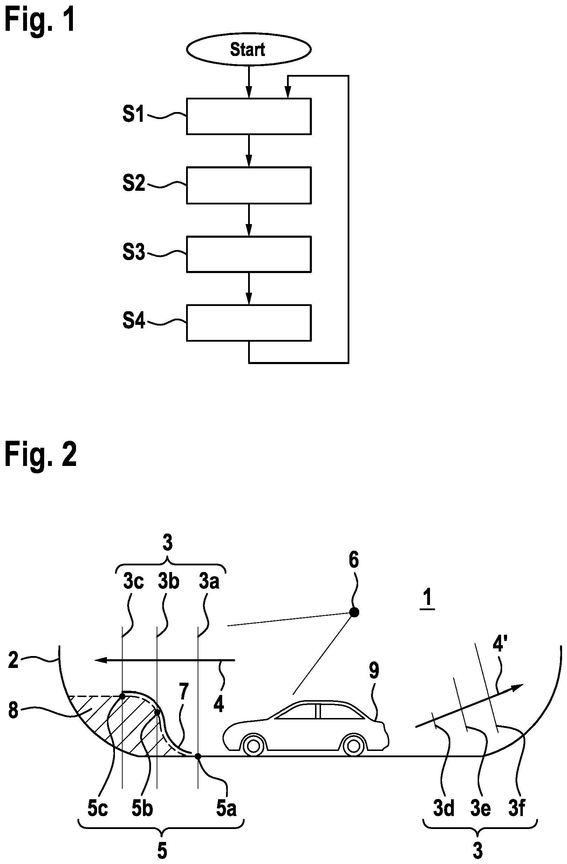

Figur 1 zeigt ein Ablaufdiagramm eines Verfahrens zur Darstellung einer Umgebung 200 eines Fahrzeuges 101 gemäß einer ersten Ausführungsform der Erfindung. Das Verfahren wird von einer Recheneinheit 100 eines Fahrassistenzsystem ausgeführt.

Das Verfahren wird gestartet, sobald von einem Fahrer des Fahrzeuges 101 eine Darstellung der Umgebung 200 des Fahrzeuges 101 angefordert wird. Sobald das Verfahren gestartet wird, wird ein erster Verfahrensschritt S1 ausgeführt.

In dem ersten Verfahrensschritt S1 erfolgt ein Erstellen einer dreidimensionalen Landschaft 2 in einem virtuellen Raum 1. Die dreidimensionale Landschaft 2 repräsentiert die Umgebung 200 des Fahrzeuges 101.

Die dreidimensionale Landschaft 2 ist in dieser ersten Ausführungsform eine Projektionsfläche, welche entsprechend der Umgebung 200 des Fahrzeuges 101 geformt ist. Der virtuelle Raum 1 mit der darin dargestellten dreidimensionalen Landschaft 2 ist beispielhaft in Figur 2 dargestellt. Die Projektionsfläche weist grundsätzlich die Form einer Schale auf. Ein Punkt in dem virtuellen Raum 1, welcher innerhalb dieser Schale oder Schüssel liegt, repräsentiert einen Punkt in der realen Welt, an welchem sich das Fahrzeug 101 befindet. Das reale Fahrzeug 101 wird in Form eines Modells 9 in den virtuellen Raum 1 übertragen. Wie auch aus Figur 2 ersichtlich ist, befindet sich das virtuelle Modell 9 des Fahrzeuges 101 daher innerhalb der schalenförmigen Projektionsfläche. Die Projektionsfläche wird derart verformt, dass diese die Umgebung des Fahrzeuges 101 nachbildet und somit die dreidimensionale Landschaft 2 formt.

In dem ersten Verfahrensschritt S1 erfolgt ein Abtasten der Umgebung des Fahrzeuges 101 durch eine Sensorik des Fahrzeuges 101. So wird beispielsweise durch Ultraschallsensoren 107, Kameras 103, 104, 105, 106 und/oder Lidar-Systeme eine Position und eine Form von Hindernissen in der Umgebung 200 des Fahrzeuges 101 ermittelt. Diese werden entsprechend ihrer Lage gegenüber dem Fahrzeug 101 in den virtuellen Raum 1 übertragen. Dies kann beispielsweise dadurch erfolgen, dass eine Belegungswahrscheinlichkeit von dreidimensionalen Pixeln (Voxeln) in dem virtuellen Raum 1 gesetzt wird. In dem in Figur 2 dargestellten Beispiel befindet sich ein weiteres Fahrzeug vor dem Fahrzeug 101, welches durch das Model 9 repräsentiert ist. Es gibt somit einen belegten Bereich 8 vor dem Model 9, in dem in einem entsprechenden Bereich in der tatsächlichen Umgebung 200 des Fahrzeuges 101 ein Hindernis, hier ein weiteres Fahrzeug, vorhanden ist. Es liegt daher eine Belegungswahrscheinlichkeit von einer Vielzahl von dreidimensionalen Pixeln in diesem belegten Bereich 8 oberhalb eines Schwellenwertes.

Die Projektionsfläche wird derart verformt, dass diese dreidimensionalen Pixel von der Projektionsfläche eingehüllt werden oder dass die als belegt markierten dreidimensionalen Pixel außerhalb der Schale liegen. In Figur 2 ist dies erkenntlich, da die Projektionsfläche sich in dem belegten Bereich 8 gegenüber einem Boden der Schale, welcher eine Fahrbahn repräsentiert, erhebt.

Der erste Verfahrensschritt S1 und somit das Erstellen der dreidimensionalen Landschaft 2 in dem virtuellen Raum 1 umfasst ferner ein Erfassen von Kamerabildern, welche die Umgebung 200 des Fahrzeuges 101 abbilden und ein Texturieren der dreidimensionalen Landschaft 2 mittels der erfassten Kamerabilder. So sind an dem Fahrzeug 101 mehrere Kameras 103, 104, 105, 106 angeordnet, die in ihren Bildern die Umgebung 200 des Fahrzeuges 101 erfassen. Diese Kamerabilder werden als Textur auf die Projektionsfläche und somit auf die dreidimensionale Landschaft 2 gelegt. Dies erfolgt in einer Art und Weise, dass auf einem Punkt der Projektionsfläche, welcher ein bestimmtes Objekt darstellt, ein Bereich eines Kamerabildes zu liegen kommt, der dieses Objekt darstellt.

Nach dem ersten Verfahrensschritt S1 wird ein zweiter Verfahrensschritt S2 ausgeführt. In dem zweiten Verfahrensschritt S2 erfolgt ein Erzeugen eines beweglichen virtuellen Elementes 3 in dem virtuellen Raum 1.

Das bewegliche virtuelle Element 3 weist die Form einer Fläche auf. Das bewegliche virtuelle Element 3 wird gemäß einem vorgegebenen Bewegungspfad 4 durch den virtuellen Raum 1 und somit durch die dreidimensionale Landschaft 2 bewegt. In Figur 2 ist das virtuelle Element 3 beispielhaft als eine Ebene dargestellt. Diese Ebene erstreckt sich aus der in Figur 2 dargestellten Ebene heraus und ist somit lediglich als eine Gerade erkennbar. Es wird darauf hingewiesen, dass eine Fläche nicht zwingend eine Ebene ist, sondern auch beispielsweise eine Wölbung aufweisen kann.

Das virtuelle Element 3 bewegt sich entlang des vorgegebenen Bewegungspfades 4. Der Bewegungspfad 4 ist in Figur 2 derart gewählt, dass sich das bewegliche virtuelle Element 3 von rechts nach links durch den virtuellen Raum bewegt. Da das virtuelle Element 3 sich durch den virtuellen Raum 1 bewegt, ist dieses virtuelle Element 3 mehrfach dargestellt. So ist ein erstes virtuelles Element 3a das virtuelle Element zu einem ersten Zeitpunkt, ein zweites virtuelles Element 3b ist das virtuelle Element 3 zu einem zweiten Zeitpunkt und ein drittes virtuelles Element 3c ist das virtuelle Element zu einem dritten Zeitpunkt.

Da das virtuelle Element 3 die Form einer Fläche aufweist und auch die dreidimensionale Landschaft 2 durch eine geformte Fläche gebildet wird, ergibt sich, dass an einer Stelle, an der das virtuelle Element mit der dreidimensionalen Landschaft 2 in Kontakt steht, eine Schnittlinie 5 vorliegt. Diese Schnittlinie 5 wird für jede Position des virtuellen Elements 3 entlang des vorgegebenen Bewegungspfades 4 ermittelt. Es wird somit eine Schnittlinie 5 des virtuellen Elementes 2 mit einer Oberfläche der dreidimensionalen Landschaft 2 ermittelt.

Die Schnittlinie 5 ist in Figur 2 für die Zeitpunkte dargestellt, für die auch das virtuelle Element 3 dargestellt ist. So zeigt Figur 2 eine erste Schnittlinie 5a, welches die Schnittlinie 5 zu dem ersten Zeitpunkt ist. Eine zweite Schnittlinie 5b ist die Schnittlinie 5 zu dem zweiten Zeitpunkt und eine dritte Schnittlinie 5c ist die Schnittlinie 5 zu dem dritten Zeitpunkt. Die Schnittlinie 5 ist in Figur 2 lediglich als ein Punkt erkenntlich, da diese in die in Figur 2 dargestellte Zeichenebene hinein bzw. aus dieser heraus läuft.

Das virtuelle Element 3 weist in dieser ersten Ausführungsform eine konstante Größe auf. In alternativen Ausführungsformen ist das virtuelle Element 3 ein expandierendes Element, dessen Größe mit der Bewegung entlang eines vorgegebenen alternativen Bewegungspfades 4' zunimmt. Dies ist beispielhaft in Figur 2 hinter einem Heck des Modells 9 des Fahrzeuges 101 dargestellt. Es ist ersichtlich, dass sich das virtuelle Element 3 nicht zwingend durch den gesamten virtuellen Raum 1 erstreckt. Das virtuelle Element 3 ist dabei zu unterschiedlichen Zeitpunkten durch die virtuellen Elemente 3d bis 3f dargestellt. Es ist ersichtlich, dass eine Fläche des virtuellen Elementes 3 über die Bewegung entlang des alternativen Bewegungspfades 4' ansteigt, also zunimmt.

In weiteren alternativen Ausführungsformen (nicht Teil der beanspruchten Erfindung) ergibt sich die Bewegung des virtuellen Elements 3 aus einer Expansion des virtuellen Elements 3. Dabei verbleibt insbesondere ein Schwerpunkt des virtuellen Elements 3 bei der Bewegung an einer gleichbleibenden Position. So weist das virtuelle Element 3 beispielsweise die Form einer Kugel oder eines Zylindermantels auf. Im Beispiel der Kugel könnte ein Ausgangspunkt des Bewegungspfades 4 das Zentrum der Kugel sein. Die Fläche des virtuellen Elements 3 expandiert und somit vergrößert sich ein Kugelradius der Kugel an. Das Zentrum der Kugel bleibt in seiner Position unverändert. Somit bleibt auch ein Schwerpunkt des virtuellen Elementes 3 bei der Bewegung an einer gleichbleibenden Position, obwohl die Fläche an sich in Bewegung ist. Als Schwerpunkt wird dabei ein geometrischer Schwerpunkt des virtuellen Elements 3 betrachtet. Auf diese Weise wird ein optischer Effekt erzeugt, bei dem die Schnittlinie 5 gleich einer Wellenausbreitung durch den virtuellen Raum 1 bewegt wird.

Optional sind mehrere virtuelle Elemente 3 gleichzeitig in dem virtuellen Raum 1 vorhanden. So können in zeitlicher Abfolge mehrere bewegliche virtuelle Elemente 3 dargestellt werden, welche sich in periodischer Abfolge gemäß dem vorgegebenen Bewegungspfad 4 durch den virtuellen Raum 1 bewegen. Es werden somit mehrere Wellenfronten erzeugt, die sich nacheinander durch den virtuellen Raum 1 bewegen bzw. ausbreiten. Die periodische Abfolge ist dabei durch ein Zeitintervall definiert, welches vergeht, bis ein jeweils weiteres bewegliches virtuelles Element 3 in dem virtuellen Raum 1 erzeugt wird. Dieses Zeitintervall ist insbesondere flexibel gestaltet. So ist dieses insbesondere von einem Abstand abhängig, welchen das Fahrzeug 101 gegenüber einem Hindernis aufweist. So wird insbesondere das Zeitintervall der periodischen Abfolge verringert, wenn sich der Abstand zwischen einem bestimmten Objekt, also dem Hindernis, in der Umgebung 200 des Fahrzeuges 101 und dem Fahrzeug 101 verringert. Ist das Fahrzeug 101 nah an einem Hindernis, so ist die periodische Abfolge durch eine hohe Frequenz, also durch ein kurzes Zeitintervall gekennzeichnet. Ist der Abstand zwischen dem bestimmten Objekt in der Umgebung 200 des Fahrzeuges 101 und dem Fahrzeug 101 groß, so ist die periodische Abfolge durch eine niedrige Frequenz und durch ein großes Zeitintervall gekennzeichnet.

In dem zweiten Verfahrensschritt S2 wird bei dieser ersten Ausführungsform der Erfindung ferner bei der Bewegung des virtuellen Elementes 3 entlang der Schnittlinie 5 eine Deckschicht 7 in dem virtuellen Raum 1 erzeugt. Die Deckschicht 7 ist beispielsweise ein grafisches Element, welches sich auf die Oberfläche der dreidimensionalen Landschaft 2 legt, wenn dieses an der entsprechenden Stelle der dreidimensionalen Landschaft 2 erzeugt wird. Die Deckschicht 7 kann auch durch eine Einfärbung der dreidimensionalen Landschaft 2 erzeugt werden. Durch die Deckschicht 7 wird ein grafisches Element bereitgestellt, durch welches einem Fahrer des Fahrzeuges 101 zusätzliche Informationen bereitgestellt werden können.

Dazu wird insbesondere eine Farbe oder eine Textur der Deckschicht 7 verändert. Da solche Informationen jedoch an Aktualität verlieren, sobald ein gewisser Zeitraum vergangen ist, werden Bereiche der Deckschicht 7 nach einem vorgegebenen Zeitraum nach deren Erzeugung aus dem virtuellen Raum 1 ausgeblendet. Das bedeutet mit anderen Worten, dass die Deckschicht 7 nur in einem bestimmten Bereich hinter der sich mit dem virtuellen Element 3 bewegenden Schnittlinie 5 sichtbar ist.

Nach dem zweiten Verfahrensschritt S 2 wird ein dritter Verfahrensschritt S 3 ausgeführt. In dem dritten Verfahrensschritt S 3 erfolgt ein wiederholtes Abbilden der dreidimensionalen Landschaft 2 aus Sicht einer virtuellen Kamera 6, welche in dem virtuellen Raum 1 angeordnet ist. Die virtuelle Kamera 6 ist in Figur 2 beispielhaft über dem Modell 9 des Fahrzeuges 101 angeordnet. Durch die virtuelle Kamera 6 wird somit eine Ansicht der Umgebung 200 des Fahrzeuges 101 aus einer Vogelperspektive erzeugt. Die virtuelle Kamera 6 ist keine wirkliche Kamera, sondern lediglich ein Punkt in dem virtuellen Raum 1, der die Basis für eine Berechnung einer grafischen Ansicht des virtuellen Raumes 1 und der darin enthaltenen Elemente ist. Bilder aus Sicht der virtuellen Kamera werden als virtuelle Kamerabilder 10 gespeichert. Wie zuvor beschrieben, wird das virtuelle Element 3 durch den virtuellen Raum 1 bewegt. Somit bewegt sich auch die Schnittlinie 5 durch den virtuellen Raum 1. Ferner wird die dreidimensionale Landschaft 2 kontinuierlich an Änderungen in der tatsächlichen Umgebung 200 des Fahrzeuges 101 angepasst. In dem virtuellen Raum 1 befindet sich also ein bewegtes Szenario. Um dieses darzustellen, wird eine Abfolge von virtuellen Kamerabildern 10 errechnet und aus diesen eine Videosequenz erzeugt. In dieser Videosequenz ist die Schnittlinie 5 in den Einzelbildern der Videosequenz dargestellt. Dazu wird diese beispielsweise eingefärbt. Das virtuelle Element 3 an sich kann entweder transparent sein, und somit nicht in den virtuellen Kamerabildern 10 und somit in der Videosequenz sichtbar sein, oder aber das virtuelle Element 3 ist ebenfalls ein sichtbares Element, wobei es vorteilhaft ist, wenn das virtuelle Element 3 als ein transparentes Element dargestellt wird.

Nach dem dritten Verfahrensschritt S3 wird ein vierter Verfahrensschritt S4 ausgeführt. In dem vierten Verfahrensschritt S4 erfolgt ein Bereitstellen der Videosequenz für eine Darstellung auf einem Ausgabegerät. Das Ausgabegerät ist ein Display 102 im Inneren des Fahrzeuges 101. Die Videosequenz wird dazu an einem Videoausgang der Recheneinheit 100 des Fahrassistenzsystems bereitgestellt.

Es wird darauf hingewiesen, dass solche Objekte, die in dem virtuellen Raum 1 als sichtbar bezeichnet werden, dann sichtbar sind, wenn diese auch bei der Darstellung in der Videosequenz auf dem Ausgabegerät sichtbar sind. Da der virtuelle Raum lediglich ein mathematisches Konstrukt ist, sind die darin berechneten Elemente an sich natürlich in keinem Fall sichtbar. Lediglich deren Darstellung in dem Bild der virtuellen Kamera 6, welches in zeitlicher Abfolge auf dem Ausgabegerät als Videosequenz ausgegeben wird, ist für einen Anwender sichtbar. Nach dem vierten Verfahrensschritt S4 verzweigt das Verfahren zurück auf den ersten Verfahrensschritt S1 und wird in einer Schleife ausgeführt, bis dies durch den Anwender beendet wird.

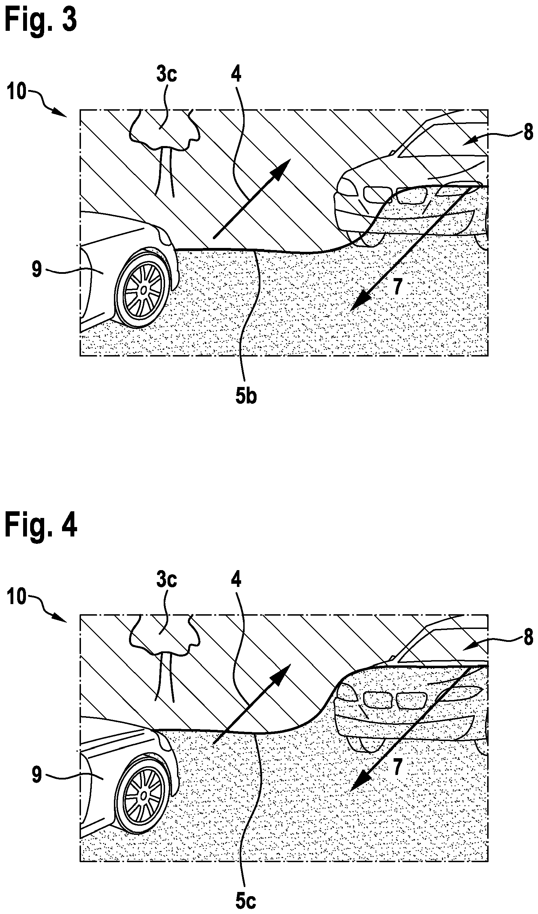

Figur 3 zeigt ein erstes beispielhaftes virtuelles Kamerabild 10 und Figur 4 zeigt ein zweites beispielhaftes virtuelles Kamerabild 10. Das erste beispielhafte virtuelles Kamerabild 10 und das zweites beispielhaftes virtuelles Kamerabild 10 sind Bilder einer erfindungsgemäß erzeugten Videosequenz. Dabei wurde das erste virtuelle Kamerabild 10 zu dem zweiten Zeitpunkt berechnet und das zweite virtuelle Kamerabild 10 wurde zu dem dritten Zeitpunkt berechnet. Somit ist in dem ersten virtuellen Kamerabild 10 die zweite Schnittlinie 5b und in dem zweiten virtuellen Kamerabild 10 die dritte Schnittlinie 5c dargestellt, die ebenfalls in Figur 2 dargestellt sind. In dem ersten und zweiten beispielhaften virtuellen Kamerabild 10 ist der belegte Bereich 8 sichtbar, in dem das weitere Fahrzeug abgebildet ist, welches sich in der Umgebung 200 des Fahrzeuges 101 befindet. Die Projektionsfläche ist in diesem belegten Bereich 8 entsprechend verformt.

Zwischen den in Figur 3 und Figur 4 dargestellten Zeitpunkten wurde das virtuelle Element 3 entlang des Bewegungspfades 4 bewegt. Daher ist in Figur 3 das zweite virtuelle Element 3b, also das virtuelle Element 3 an seiner Position zu dem zweiten Zeitpunkt, und in Figur 4 das dritte virtuelle Element 3c, also das virtuelle Element 3 an seiner Position zu dem dritten Zeitpunkt, dargestellt. Auch wenn dieses in Figur 3 und Figur 4 sichtbar dargestellt ist, kann dieses in einer erfindungsgemäßen Darstellung der Videosequenz unsichtbar sein.

Es ist ersichtlich, wie sich die Schnittlinie 5 in dem belegten Bereich 8, in dem ein Hindernis dargestellt wird, an das dargestellte Hindernis anlegt. Schon aus dem Verlauf der Schnittlinie 5 ist es für den Fahrer erkenntlich, dass sich ein Hindernis in der Umgebung 200 des Fahrzeuges 101 befindet. Ferner ist in Figur 3 und Figur 4 ersichtlich, dass ein Bereich hinter der Schnittlinie 5, also in einer Richtung entgegen des Bewegungspfades 4, eine Texturierung der dreidimensionalen Landschaft 2 erfolgt ist. Diese Texturierung ergibt sich dadurch, dass in diesem Bereich die Deckschicht 7 erzeugt wurde und diese für die in Figur 3 und Figur 4 dargestellte Ausführungsform eine Texturierung aufweist. Die Texturierung der Deckschicht 7 ist dabei derart gewählt, dass die Bilder, welche als Textur auf der Projektionsfläche liegen, weichgezeichnet werden.

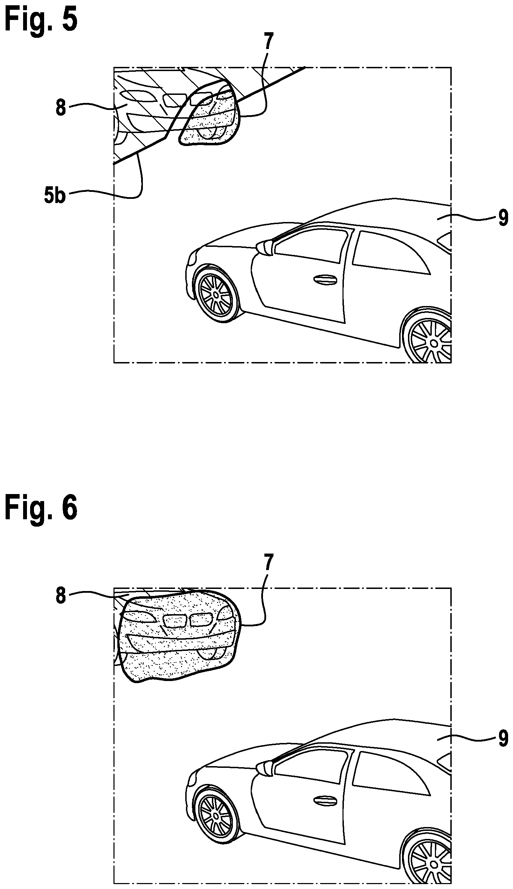

Figur 5 zeigt ein beispielhaftes drittes virtuelles Kamerabild 10 und Figur 6 zeigt ein beispielhaftes viertes virtuelles Kamerabild 10. Das dritte beispielhafte virtuelles Kamerabild 10 und das vierte beispielhaftes virtuelle Kamerabild 10 sind Bilder einer erfindungsgemäß erzeugten Videosequenz. Das beispielhafte dritte virtuelle Kamerabild 10 und das beispielhafte vierte virtuelle Kamerabild 10 stellen ebenfalls die in Figur 3 und Figur 4 abgebildete Szene dar. Dabei ist jedoch eine Position der virtuellen Kamera 6 unterschiedlich gewählt worden. Ferner wurde dabei die Deckschicht 7 lediglich in den Bereichen der Schnittlinie 5 erzeugt, die solchen Bereichen in der Umgebung 200 des Fahrzeugs 101 entspricht, in denen ein Hindernis vorhanden ist. Die Deckschicht 7 erstreckt sich daher nicht über den gesamten Bereich, der Umgebung 200 des Fahrzeuges 101. Lediglich dort, wo sich das weitere Fahrzeug befindet, also in dem belegten Bereich 8, wird die Deckschicht 7 erzeugt. Dies wird beispielsweise dadurch erreicht, dass die Deckschicht nur dann erzeugt wird, wenn ein Objekt sich oberhalb eines bestimmten Höhenbereiches in den virtuellen Raum erstreckt.

Die Deckschicht 7 wird eingefärbt oder texturiert und entsprechend in den virtuellen Kamerabildern 10 abgebildet. So wird beispielsweise eine Farbe oder eine Textur von Punkten der Deckschicht 7 abhängig davon gewählt, welchen Abstand ein jeweiliger Punkt der Deckschicht 7 zu der virtuellen Kamera 6 aufweist. Alternativ wird eine Farbe oder Textur von Punkten der Deckschicht 7 abhängig davon gewählt, welchen Abstand ein dem jeweiligen Punkt der Deckschicht 7 zugehöriger Punkt in der tatsächlichen Umgebung 200 des Fahrzeuges 101 zu dem Fahrzeug 101 aufweist. So ist die Deckschicht 7 beispielsweise rot eingefärbt, wenn ein Hindernis, auf welchem die Deckschicht 7 angeordnet ist, dem Fahrzeug 101 nahe ist. Weist das Hindernis einen größeren Abstand auf, so wird dieses beispielsweise gelb oder bei größeren Abständen grün eingefärbt. Eine Unterscheidung zwischen nah und fern kann dabei beispielsweise mittels eines Enfernungsschwellenwertes erfolgen. Alternativ oder zusätzlich wird die Farbe oder Textur von Punkten der Deckschicht 7 abhängig davon gewählt, wie der jeweilige Punkt der Deckschicht 7 gegenüber einer Bewegungstrajektorie des Fahrzeugs 101 angeordnet ist. Eine Bewegungstrajektorie des Fahrzeugs 101 kann beispielsweise daraus errechnet werden, mit welcher Geschwindigkeit sich das Fahrzeug 101 bewegt, welcher Lenkeinschlag vorliegt und/oder welcher Gang eingelegt ist. Die Bewegungstrajektorie beschreibt somit eine zukünftige zu erwartende Bewegung des Fahrzeuges 101. Deutet die Bewegungstrajektorie darauf hin, dass das Fahrzeug 101 mit einem Hindernis kollidiert, falls es der Bewegungstrajektorie folgt, so wird die Deckschicht 7 auf dem entsprechenden Hindernis beispielsweise rot gefärbt.

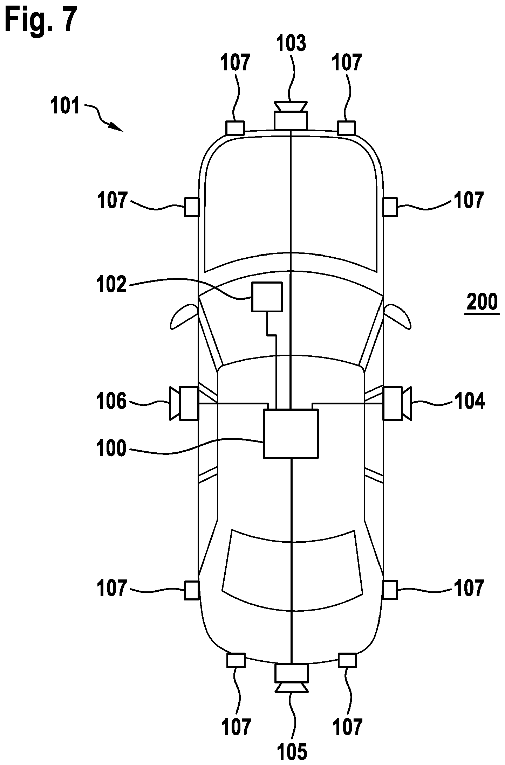

Figur 7 zeigt eine Darstellung eines Fahrzeugs 101 mit einer erfindungsgemäßen Vorrichtung zur Darstellung einer Umgebung 200 eines Fahrzeuges 101. In dem Fahrzeug 101 ist eine Recheneinheit 100 angeordnet, durch welche der erste bis vierte Verfahrensschritt S1 bis S4 ausgeführt wird. An dem Fahrzeug 101 sind eine erste bis vierte Kamera 103 bis 106 angeordnet, durch welche die Umgebung 200 des Fahrzeuges 101 in den Kamerabildern erfasst wird, welche als Textur auf die dreidimensionale Landschaft 2 gelegt werden. Ferner sind an dem Fahrzeug 101 eine Vielzahl von Ultraschallsensoren 107 angeordnet, welche die Sensorik des Fahrzeuges 101 sind, durch welche die Position und die Form von Hindernissen in der Umgebung des Fahrzeuges 101 ermittelt wird. Die erste bis vierte Kamera 103 - 106 sowie die Vielzahl von Ultraschallsensoren 107 ist mit der Recheneinheit 100 gekoppelt, um erfasste Daten an diese zu übertragen. In einem Innenraum des Fahrzeuges 101 ist der Display 102 angeordnet, der ein Ausgabegerät ist, auf welchem die Videosequenz dargestellt wird.

Zusammenfassend wird somit zunächst eine Umgebungskarte erzeugt, welche eine Karte von Objekten ist, die durch Videoinformationen und externe Sensoren erfasst werden. Daraus wird eine dreidimensionale Karte erstellt, welche das Umfeld und umgebende Objekte und Strukturen des Fahrzeuges 101 darstellt. Jeder dreidimensionale Punkt dieser Karte stellt eine Wahrscheinlichkeit dar, dass sich dort ein tatsächliches Objekt befindet. Dann werden einhüllende Formen für die unterschiedlichen Objekte für die nächstgelegenen Objekte und relevantesten Hindernisse erzeugt. Dies sind die Objekte mit der höchsten Bewegungswahrscheinlichkeit der zugehörigen dreidimensionalen Pixel. Diese Formen oder dreidimensionalen Netze, die sich aus der umgebenden Welt des Fahrzeuges 101 ergeben, werden mit Bildern texturiert, die von Kameras des Fahrzeuges 101 erfasst werden. Dann wird ein Wellenoverlay in diese dreidimensionale virtuelle Welt projiziert, welche sich über den Boden der virtuellen Welt in alle Richtungen ausbreitet. Ein Zentrum dieser Wellenausbreitung ist bevorzugt das Model 9 des Fahrzeugs 101. Das Wellenoverlay wird verformt, wenn dieses auf Hindernisse trifft. Dabei passt sich dessen Form an eine Einhüllende des Hindernisses an. Diese Wellenoverlays werden bevorzugt periodisch ausgesandt, wobei eine Intervallzeit des Aussendezyklus erhöht wird, wenn sich ein Abstand eines Objekts zu dem Fahrzeug 101 verändert. Je näher ein Objekt dem Fahrzeug 101 ist, desto schneller werden die aus Wellenoverlays gebildeten Wellen ausgesandt. Dabei wird das Wellenoverlay, also die Schnittlinie 5 oder die Deckschicht 7, abhängig von einer Objektdistanz zu dem Fahrzeug 101 eingefärbt. Sobald eine Welle auf ein Objekt trifft, wird dieses mit der Deckschicht 7 eingehüllt, welcher eine entsprechende Farbe zugeteilt wird. Durch die Farbe wird eine Relevanz des Objektes angedeutet. Ist das Objekt sehr nahe zu dem Fahrzeug 101, wird die Farbe Rot gewählt, Gelb steht für ein mittleres Risiko und Grün für einen großen Abstand. Diese Farbgebung kann gegebenenfalls durch einen Fahrer oder einen Anwender mittels einer Menüeingabe angepasst werden. Dabei ist es ferner vorteilhaft, wenn eine Textur der Deckschicht 7 zu einem Weichzeichnen führt. Eine Markierung bzw. eine Farbintensität der Deckschicht wird basierend auf einer Bewegungstrajektorie des Fahrzeuges 101 gewählt bzw. angepasst. Falls die Bewegungstrajektorie an einem Hindernis vorbeiführt, können Farbwechsel bzw. Farben der Deckschicht weniger transparent gewählt werden gegenüber einem Zustand, in dem das Fahrzeug 101 nicht an dem Hindernis vorbeifährt.

Es wird somit unter anderem auch eine Vergleichbarkeit von Parkmöglichkeiten für den Fahrer bereitgestellt. Ferner werden Bereiche mit hoher Relevanz für den Fahrer hervorgehoben.

Nebst oben stehender Offenbarung wird explizit auf die Offenbarung der Figuren 1 bis 7 hingewiesen.

## Patentansprüche

1. Verfahren zur Darstellung einer Umgebung eines Fahrzeuges (101), umfassend:
- Erstellen einer Projektionsfläche als dreidimensionale Landschaft (2) in einem virtuellen Raum (1), wobei die Projektionsfläche entsprechend der Umgebung (200) des Fahrzeugs geformt ist und wobei ein Hindernis in der Umgebung des Fahrzeugs als belegter Bereich (8) im virtuellen Raum dargestellt wird und die Projektionsfläche in einem belegten Bereich entsprechend verformt ist,
- Bereitstellen einer Videosequenz für ein Ausgabegerät,
**dadurch gekennzeichnet, dass** das Verfahren die folgenden Schritte aufweist
- Erzeugen eines beweglichen virtuellen Elementes (3) in dem virtuellen Raum (1), welches die Form einer Fläche aufweist und sich gemäß einem vorgegebenen Bewegungspfad (4) durch die dreidimensionale Landschaft bewegt, wobei für jede Position entlang des vorgegebenen Bewegungspfades (4) eine Schnittlinie (5) des virtuellen Elementes (3) mit der Projektionsfläche als dreidimensionale Landschaft (2) ermittelt wird, wobei sich die Schnittlinie (5) in dem belegten Bereich (8), in dem ein Hindernis dargestellt wird, an das dargestellte Hindernis anlegt, und
- wiederholtes Abbilden der Projektionsfläche als dreidimensionale Landschaft (2) aus Sicht einer virtuellen Kamera (6), welche in dem virtuellen Raum (1) angeordnet ist, in einem virtuellen Kamerabild (10), wobei aus einer Abfolge von virtuellen Kamerabildern (10) eine Videosequenz erzeugt wird, wobei die Schnittlinie (5) in Einzelbildern der Videosequenz dargestellt ist und sich das virtuelle Element (3) ähnlich einer Wellenfront in dem virtuellen Raum ausbreitet.

2. Verfahren gemäß Anspruch 1, **dadurch gekennzeichnet, dass** das Erstellen der dreidimensionalen Landschaft in dem virtuellen Raum (1) ferner umfasst:
- ein Erfassen von Kamerabildern, welche die Umgebung des Fahrzeuges abbilden,
- ein Texturieren der dreidimensionalen Landschaft (2) mittels der erfassten Kamerabilder.

3. Verfahren gemäß einem der voranstehenden Ansprüche, **dadurch gekennzeichnet, dass** das bewegliche virtuelle Element (3) ein expandierendes Element ist, dessen Größe mit der Bewegung entlang des vorgegebenen Bewegungspfades (3) zunimmt.

4. Verfahren gemäß einem der voranstehenden Ansprüche, **dadurch gekennzeichnet, dass** in zeitlicher Abfolge mehrere bewegliche virtuelle Elemente (3) dargestellt werden, welche sich in periodischer Abfolge gemäß dem vorgegebenen Bewegungspfad (4) durch den virtuellen Raum (1) bewegen.

5. Verfahren gemäß Anspruch 4, **dadurch gekennzeichnet, dass** ein Zeitintervall der periodischen Abfolge verringert wird, wenn sich ein Abstand zwischen einem bestimmten Objekt in der Umgebung des Fahrzeuges und dem Fahrzeug verringert.

6. Verfahren gemäß einem der voranstehenden Ansprüche, **dadurch gekennzeichnet, dass** bei der Bewegung des virtuellen Elementes (3) entlang der Schnittlinie (5) eine Deckschicht (7) in dem virtuellen Raum (1) erzeugt wird, wobei die Deckschicht (7) insbesondere nur in den Bereichen (8) der Schnittlinie (5) erzeugt wird, die solchen Bereichen in der Umgebung des Fahrzeuges entsprechen, in denen ein Hindernis vorhanden ist.

7. Verfahren gemäß Anspruch 6, **dadurch gekennzeichnet, dass** Bereiche der Deckschicht (7) nach einem vorgegeben Zeitraum nach deren Erzeugung aus dem virtuellen Raum (1) ausgeblendet werden.

8. Verfahren gemäß einem der Ansprüche 6 oder 7, **dadurch gekennzeichnet, dass** eine Farbe oder Textur von Punkten der Deckschicht (7) abhängig davon gewählt wird,
- welchen Abstand ein jeweiliger Punkt der Deckschicht (7) zu der virtuellen Kamera (6) aufweist,
- welchen Abstand ein dem jeweiligen Punkt der Deckschicht (7) zugehöriger Punkt in der tatsächlichen Fahrzeugumgebung zu dem Fahrzeug aufweist, oder
- wo der jeweiligen Punkt der Deckschicht (7) bezüglich einer Bewegungstrajektorie des Fahrzeuges angeordnet ist.

9. Vorrichtung zum Bereitstellen einer Darstellung einer Umgebung (200) eines Fahrzeuges (100), umfassend eine Recheneinheit (101), welche dazu eingerichtet ist:
- eine Projektionsfläche als dreidimensionale Landschaft (2) in einem virtuellen Raum (1) zu erstellen, wobei die Projektionsfläche entsprechend der Umgebung (200) des Fahrzeugs geformt ist und wobei ein Hindernis in der Umgebung des Fahrzeugs als belegter Bereich im virtuellen Raum dargestellt wird und die Projektionsfläche in dem belegten Bereich entsprechend verformt ist und
- eine Videosequenz für ein Ausgabegerät (102) bereitzustellen.
**dadurch gekennzeichnet, dass** die Recheneinheit dazu eingerichtet ist,
- ein beweglichen virtuellen Elementes (3) in dem virtuellen Raum (1) zu erzeugen, welches die Form einer Fläche aufweist und sich gemäß einem vorgegebenen Bewegungspfad (4) durch die dreidimensionale Landschaft bewegt und für jede Position entlang des vorgegebenen Bewegungspfades (4) eine Schnittlinie (5) des virtuellen Elementes (3) mit der Projektionsfläche als dreidimensionale Landschaft (2) zu ermittelt, wobei sich die Schnittlinie (5) in dem belegten Bereich (8), in dem ein Hindernis dargestellt wird, an das dargestellte Hindernis anlegt, und
- die dreidimensionalen Landschaft (2) als Projektionsfläche aus Sicht einer virtuellen Kamera (6), welche in dem virtuellen Raum (1) angeordnet ist, in einem virtuellen Kamerabild (10) wiederholt abzubilden, wobei aus einer Abfolge von virtuellen Kamerabildern (10) eine Videosequenz erzeugt wird, wobei die Schnittlinie (5) in Einzelbildern der Videosequenz dargestellt ist und sich das virtuelle Element (3) ähnlich einer Wellenfront wie eine Welle in dem virtuellen Raum ausbreitet.

## Claims

1. Method for presenting a surrounding area of a vehicle (101), comprising:
- creating a projection surface as a three-dimensional landscape (2) in a virtual space (1), wherein the projection surface is formed corresponding to the surrounding area (200) of the vehicle and wherein an obstacle in the surrounding area of the vehicle is presented as an occupied region (8) in the virtual space and the projection surface is correspondingly deformed in an occupied region,
- providing a video sequence for an output device, **characterized in that** the method has the following steps:
- generating a moving virtual element (3) in the virtual space (1) that has the form of a surface and moves through the three-dimensional landscape in accordance with a prescribed movement path (4), wherein an intersection line (5) of the virtual element (3) with the projection surface as the three-dimensional landscape (2) is ascertained for each position along the prescribed movement path (4), wherein the intersection line (5) in the occupied region (8), in which an obstacle is presented, touches the presented obstacle, and
- repeatedly imaging the projection surface as the three-dimensional landscape (2) from the view of a virtual camera (6), arranged in the virtual space (1), in a virtual camera image (10), wherein a video sequence is generated from a sequence of virtual camera images (10), wherein the intersection line (5) is presented in frames of the video sequence and the virtual element (3) propagates in the virtual space similar to a wavefront.

2. Method according to Claim 1, **characterized in that** creating the three-dimensional landscape in the virtual space (1) furthermore comprises:
- capturing camera images that image the surrounding area of the vehicle,
- texturizing the three-dimensional landscape (2) by means of the captured camera images.

3. Method according to either of the preceding claims, **characterized in that** the moving virtual element (3) is an expanding element, the size of which increases with the movement along the prescribed movement path (3).

4. Method according to one of the preceding claims, **characterized in that** a plurality of moving virtual elements (3), which move in a periodic sequence through the virtual space (1) in accordance with the prescribed movement path (4), are presented in a temporal sequence.

5. Method according to Claim 4, **characterized in that** a time interval of the periodic sequence is reduced if a distance between a determined object in the surrounding area of the vehicle and the vehicle decreases.

6. Method according to one of the preceding claims, **characterized in that** a cover layer (7) is generated in the virtual space (1) as the virtual element (3) moves along the intersection line (5), wherein the cover layer (7) is generated in particular only in the regions (8) of the intersection line (5) that correspond to such regions in the surrounding area of the vehicle in which an obstacle is present.

7. Method according to Claim 6, **characterized in that** regions of the cover layer (7) are masked out in the virtual space (1) after a prescribed period of time after their generation.

8. Method according to either of Claims 6 and 7, **characterized in that** a colour or texture of points of the cover layer (7) is selected depending on
- the distance a respective point of the cover layer (7) has from the virtual camera (6),
- the distance a point in the actual surrounding area of the vehicle that is associated with the respective point of the cover layer (7) has from the vehicle, or
- where the respective point of the cover layer (7) is disposed with respect to a movement trajectory of the vehicle.

9. Apparatus for providing a presentation of a surrounding area (200) of the vehicle (100), comprising a computing unit (101), which is configured for:
- creating a projection surface as a three-dimensional landscape (2) in a virtual space (1), wherein the projection surface is formed corresponding to the surrounding area (200) of the vehicle and wherein an obstacle in the surrounding area of the vehicle is presented as an occupied region in the virtual space and the projection surface is correspondingly deformed in the occupied region, and
- providing a video sequence for an output device (102),
**characterized in that** the computing unit is configured for:
- generating a moving virtual element (3) in the virtual space (1) that has the form of a surface and moves through the three-dimensional landscape in accordance with a prescribed movement path (4), and ascertaining an intersection line (5) of the virtual element (3) with the projection surface as the three-dimensional landscape (2) for each position along the prescribed movement path (4), wherein the intersection line (5) in the occupied region (8), in which an obstacle is presented, touches the presented obstacle, and
- repeatedly imaging the three-dimensional landscape (2) as the projection surface from the view of a virtual camera (6), arranged in the virtual space (1), in a virtual camera image (10), wherein a video sequence is generated from a sequence of virtual camera images (10), wherein the intersection line (5) is presented in frames of the video sequence and the virtual element (3) propagates in the virtual space like a wave similar to a wavefront.

## Revendications

1. Procédé de représentation de l'environnement d'un véhicule (101), le procédé comprenant les étapes suivantes :
- créer une surface de projection sous la forme d'un paysage tridimensionnel (2) dans un espace virtuel (1), la surface de projection étant formée en fonction de l'environnement (200) du véhicule et un obstacle dans l'environnement du véhicule étant représenté comme une zone occupée (8) dans l'espace virtuel et la surface de projection étant déformée de façon appropriée dans une zone occupée,
- fournir une séquence vidéo destinée à un équipement de sortie,
**caractérisé en ce que** le procédé comporte les étapes suivantes
- générer dans l'espace virtuel (1) un élément virtuel mobile (3) qui a la forme d'une surface et qui se déplace suivant un chemin de déplacement spécifié (4) à travers le paysage tridimensionnel, une ligne d'intersection (5) de l'élément virtuel (3) avec la surface de projection étant déterminée comme paysage tridimensionnel (2) pour chaque position le long du chemin de déplacement spécifié (4), la ligne d'intersection (5) dans la zone occupée (8), dans laquelle un obstacle est représenté, étant appliquée à l'obstacle représenté, et
- reproduire de manière répétée la surface de projection sous la forme d'un paysage tridimensionnel (2) du point de vue d'une caméra virtuelle (6) qui est disposée dans l'espace virtuel (1), dans une image de caméra virtuelle (10), une séquence vidéo étant générée à partir d'une succession d'images de caméra virtuelle (10), la ligne d'intersection (5) étant représentée dans des images individuelles de la séquence vidéo et l'élément virtuel (3) se propageant comme un front d'onde dans l'espace virtuel.

2. Procédé selon la revendication 1, **caractérisé en ce que** la création du paysage tridimensionnel dans l'espace virtuel (1) comprend en outre les étapes suivantes :
- capturer des images de caméra qui représentent l'environnement du véhicule,
- texturer le paysage tridimensionnel (2) au moyen des images de caméra capturées.

3. Procédé selon l'une des revendications précédentes, **caractérisé en ce que** l'élément virtuel mobile (3) est un élément extensible dont la dimension augmente avec le déplacement le long du chemin de déplacement spécifié (3).

4. Procédé selon l'une des revendications précédentes, **caractérisé en ce qu'**une pluralité d'éléments virtuels mobiles (3), qui se déplacent suivant une succession périodique le long du chemin de déplacement spécifié (4) à travers l'espace virtuel (1), sont représentés suivant une succession temporelle.

5. Procédé selon la revendication 4, **caractérisé en ce qu'**un intervalle de temps de la succession périodique est réduit lorsque la distance entre un objet déterminé dans l'environnement du véhicule et le véhicule diminue.

6. Procédé selon l'une des revendications précédentes, **caractérisé en ce que**, lorsque l'élément virtuel (3) se déplace le long de la ligne d'intersection (5), une couche de recouvrement (7) est générée dans l'espace virtuel (1), la couche de recouvrement (7) n'étant en particulier générée que dans les zones (8) de la ligne d'intersection (5) qui correspondent aux zones de l'environnement du véhicule dans lesquelles un obstacle est présent.

7. Procédé selon la revendication 6, **caractérisé en ce que** des zones de la couche de recouvrement (7) sont cachées de l'espace virtuel (1) après un intervalle de temps spécifié après que celles-ci ont été générées.

8. Procédé selon l'une des revendications 6 et 7, **caractérisé en ce qu'**une couleur ou texture de points de la couche de recouvrement (7) est choisie en fonction de
- la distance entre un point respectif de la couche de recouvrement (7) et la caméra virtuelle (6),
- la distance entre un point de l'environnement réel du véhicule, appartenant au point respectif de la couche de recouvrement (7), et le véhicule, ou
- l'endroit où le point respectif de la couche de couverture (7) est disposé par rapport à une trajectoire de déplacement du véhicule.

9. Dispositif de fourniture d'une représentation d'un environnement (200) d'un véhicule (100), ledit dispositif comprenant une unité de calcul (101) qui est conçue pour :
- créer une surface de projection sous la forme d'un paysage tridimensionnel (2) dans un espace virtuel (1), la surface de projection étant formée en fonction de l'environnement (200) du véhicule et un obstacle dans l'environnement du véhicule étant représenté sous la forme d'une zone occupée dans l'espace virtuel et la surface de projection étant déformée de manière appropriée dans la zone occupée, et
- fournir une séquence vidéo destinée à un équipement de sortie (102),
**caractérisé en ce que** l'unité de calcul est conçue pour
- générer dans l'espace virtuel (1) un élément virtuel mobile (3) qui a la forme d'une surface et qui se déplace suivant un chemin de déplacement (4) à travers le paysage tridimensionnel et déterminer, pour chaque position le long du chemin de déplacement spécifié (4), une ligne d'intersection (5) de l'élément virtuel (3) avec la surface de projection sous la forme d'un paysage tridimensionnel (2), la ligne d'intersection (5) dans la zone occupée (8), dans laquelle un obstacle est représenté, étant appliquée à l'obstacle représente, et
- reproduire de manière répétée le paysage tridimensionnel (2) sous la forme d'une surface de projection du point de vue d'une caméra virtuelle (6), qui est disposée dans l'espace virtuel (1), dans une image de caméra virtuelle (10), une séquence vidéo étant générée à partir d'une succession d'images de caméra virtuelle (10), la ligne d'intersection (5) étant représentée dans des images individuelles de la séquence vidéo et l'élément virtuel (3) se propageant comme une vague de manière similaire à un front d'onde dans l'espace virtuel.
